# EUROPEAN PATENT SPECIFICATION

(11) **EP 3 403 781 B1**
(45) Date of publication and mention of the grant of the patent: **22.01.2020**
(21) Application number: 18170230.9
(22) Date of filing: 01.05.2018
(51) Int. Cl.: B26D 1/02, B28D 1/22, B26D 3/08, C03B 37/16

(54) **SCORING AND SLICING APPARATUS**
RITZ- UND SCHNEIDEVORRICHTUNG
APPAREIL DE DÉCOUPAGE ET DE NOTATION

(30) Priority: 01.05.2017 US 201715582810
(43) Date of publication of application: 21.11.2018
(73) Proprietor: Gunntech Manufacturing, Inc., Hayden, ID 83835 (US)
(72) Inventor: GUNN, Dalen E., Coeur D'Alene, Idaho 83815 (US); BRAND, Nathaniel P., Coeur D'Alene, Idaho 83814 (US)
(74) Representative: Doherty, William

(56) References cited:
- FR-A1- 2 891 762
- US-A- 3 576 148
- US-A- 3 779 119

## Description

### FIELD OF THE DISCLOSURE

The described apparatus relates to manually operated tools, and more particularly, to tools that are used for scoring and slicing actions, and especially for use with workpieces made of sheet or plank stocks of paper, fabric, wood, plastic, metal, ceramic, glass and like materials.

### BACKGROUND

Sheet material cutting devices are known in the art. One such device is described in Keeton, 3,213,736 for cutting mats. The latter mat cutting device employs an elongated tie bar which is supported by end located arms. The arms in turn are pivotally mounted on a working board to lift the tie bar with its cutter elements and place a mat underneath on the working surface. The cutting elements slide along a rail located in the tie bar and are disposed on opposite sides of the tie bar to respectively provide either a straight or beveled cut. Another sheet material cutting apparatus is described in Matthew, 3,774,495. In this patent, a key-shaped cutting arrangement is shown to provide guide surfaces, one of which supports a cutting block. The cutting block is mounted to enclose this guide surface. The material to be cut abuts against a stop plate carrying a scale and a scale is moved along with the cutting block itself. In Broides, U.S. Pat. No. 3,779,119, a mat cutting apparatus is described wherein a cutting element is mounted on a guide rail. Other U.S. patents of interest which describe various devices for cutting sheet material are Wensink, 2,696,867; Melchor, 2,531,149 in connection with a floor tile cutting device; and Katz, 3,576,148 which describes a device for forming a strip mat. Finally, FR 2891762 discloses a tile cutter, comprising a base plate for accommodating a tile, which base plate extends in the horizontal direction in the usage position of the tile cutter, and a slide that can be moved in the horizontal direction along a guide above the base plate, on which slide a cutting element carrier, in particular, a cutting wheel carrier, is articulated, which cutting element carrier bears a cutting element, in particular a cutting wheel, wherein the cutting element carrier is supported by means of a counter stop when the slide is moved along the guide in a cutting direction, and so force is applied to the cutting element downward in the vertical direction in order to produce a notch in the tile. In order to further develop the tile cutter in a manner that is advantageous to use, the cutting element carrier is articulated on the slide in such a way that the cutting element carrier slides or rolls across the tile substantially without vertical force application when the slide is moved in a direction opposite the cutting direction. The prior art fails to teach a manually operated apparatus for longitudinally scoring and slicing materials of arbitrary length. Furthermore, the prior art does not provide a means of quickly latching the guiding and score/cutting mechanisms when placed in-close-proximity to the workpiece being cut. Finally, the prior art does not describe a guide system which is adjustable to match the width of a selected workpiece and to hold the workpiece on a true linear cutting direction.

### SUMMARY

A portable, hand held, manually operated, apparatus is used for scoring and slicing a workpiece, for instance: semi-rigid, fibrous, and/or resilient sheet or plank materials. The apparatus has a handle, a pair of rails secured to the handle, a blade carriage which slides along the rails into a desired cutting position. Opposing workpiece guides have runners for supporting the workpiece. One of the workpiece guides is attached to a guide carriage which slides along the rails to a position for spacing the workpiece guides a workpiece-width apart. A blade cartridge is mounted in the blade carriage and is vertically adjustable. A keen edged blade is mounted in the blade cartridge and protrudes downwardly for engagement with the workpiece. The degree of engagement depends on the desired depth of scoring or slicing into the workpiece. Examples of blade adjustment mechanisms that may be used include: screw-follower pairs, rack-and pinion apparatus with latching or ratcheting members, and detent-latching shafts among other well- known solutions. Two latches are used, one attached to the blade carriage and the other attached to the guide carriage. Both latches engage one of the rails to act as a brake preventing carriage motion when engaged and to allow carriage motion when disengaged. Examples of latches that may be used for this function include: cam-action clamps, detent latching pins, screw-driven clamps, and spring-driven clamps, among other well-known solutions. In use, with the latches disengaged, the guide carriage is movable along the rails to set the workpiece guides by a distance apart that enables the workpiece to enter between the workpiece guides, and then the guide carriage latch is engaged to hold that spacing. The blade carriage is moved along the rails between the workpiece guides to a desired cut position and the blade carriage latch is then engaged to hold the blade carriage at that location during scoring and slicing operations. In order to adjust a depth of cut, the blade cartridge position is adjusted vertically by rotating a blade adjustment knob positioned on top of the blade carriage. The workpiece guides and runners constrain the workpiece for linear cutting motion by pushing the apparatus along the workpiece. One object of the described apparatus is to be able to score and slice or cut the aforementioned-types of workpieces as well as similar and related materials. Another object of the apparatus is to provide a tool that enables scoring, slicing, and cutting such workpiece materials along a linear path without requiring undue attention or skill by an operator. A further object of the apparatus is to provide a tool with quick adjustment of a location and depth of cut in a workpiece. A still further object of the apparatus is to provide a tool that enables receiving and controlling a wide range of workpiece widths. A still further object of the apparatus is to provide a tool that enables cutting a workpiece of any length without changing tool set-up, as long as the workpiece's width remains constant over its length. In this disclosure, the terms "a" or "an" are used, as is common in patent documents, to include one or more than one. Furthermore, the term "or" is used to refer to a nonexclusive "or," such that "A or B" includes "A but not B," "B but not A," and "A and B," unless otherwise indicated.

### BRIEF DESCRIPTION OF THE DRAWINGS

Embodiments of the described apparatus are illustrated only as examples in the figures of the accompanying drawing sheets wherein the same reference numeral refers to the same element as it may appear in several drawing sheets.
Figure 1 is a perspective view of an embodiment of the described and claimed apparatus.

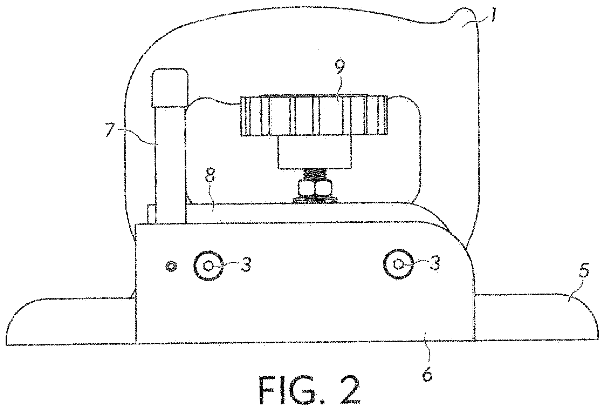

Figure 2 is a left side elevation view thereof.

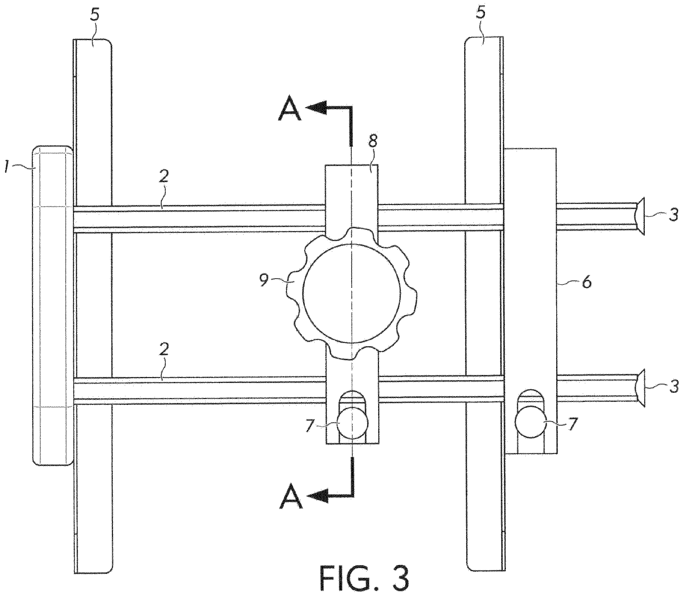

Figure 3 is a top plan view thereof.
Figure 4 is a rear elevation view of the apparatus showing workpiece placement.
Figure 5 is a section view taken along line A-A of figure 3.
Figure 6 is an exploded elevation view of a blade carriage assembly, a blade holder, and supporting hardware.
Figure 7 is an exploded perspective view of the blade holder.
Figure 8 is a side elevation view of the blade holder.
Figure 9 is a section view taken along line B-B of figure 8.
Figure 10 is a bottom view of the blade holder.

### DETAILED DESCRIPTION OF THE APPARATUS

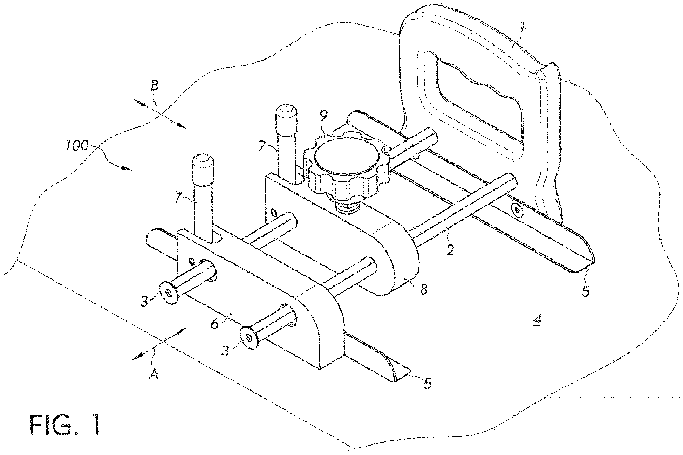

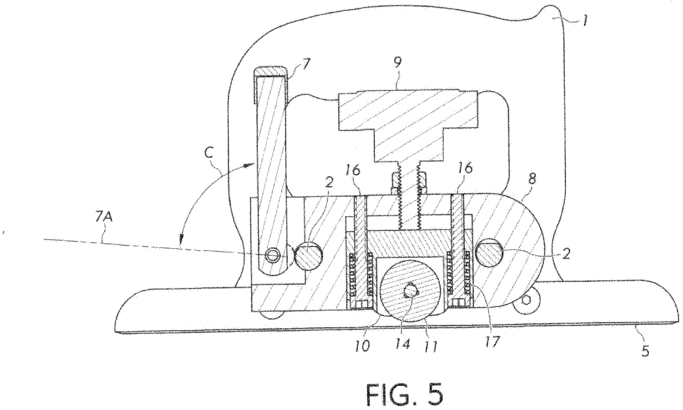

Described in detail now is a scoring and slicing apparatus, ("apparatus **100**") as best seen in **Fig. 1****.** The term "scoring" herein refers to an action of cutting part-way into a workpiece **110** (see **Fig. 5**). The term "slicing" herein refers to an action of cutting completely through workpiece **110** thereby fully severing it, and is equivalent herein to the term "cutting." The term "cutting" is used in this description to refer to scoring, slicing, and severing.

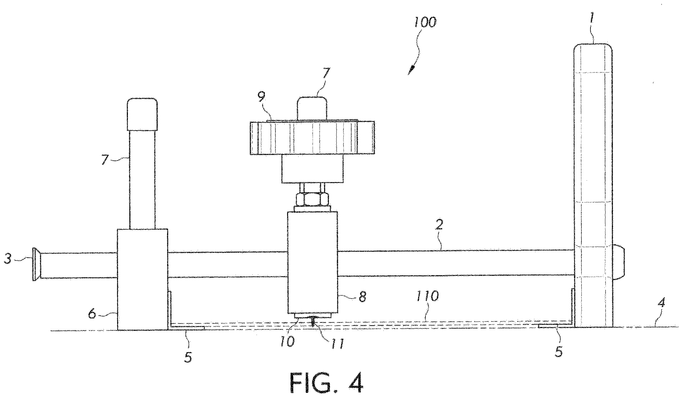

Referring now to the drawing figures described above and which drawing sheets are made a part of this specification, it should be recognized that apparatus **100** is used for cutting workpiece **110.** As shown in **Fig. 1****,** apparatus **100** may have a pair of spaced apart rails **2** which may be fixed to a handle **1** by any mechanical means wherein rails **2** may extend away from handle **1** in a first direction defined by arrow "**A.**" Potentially, a single rail **2** may be used or more than two rails **2** may be used in alternate embodiments, however, two rails **2** have been found to be sufficient and effective in meeting the objectives of apparatus **100.** A guide carriage **6** may be slidingly engaged with rails **2,** as shown, so that carriage **6** is able to move in direction "**A**" for being positioned selectively on rails **2.** As further shown in **Fig. 1****,** rails **2** may have termination elements **3** such as common hardware items, for preventing guide carriage **6** from disengaging from rails **2.** A blade carriage **8** may also be slidingly engaged with rails **2** and may be positioned between handle **1** and guide carriage **6** so that it also is able to move in direction "**A**" for being positioned selectively on rails **2** for cutting workpiece **110** at a selected location. It should be understood that more than one blade carriage **8** may be mounted on rails **2** between handle **1** and guide carriage **6** so that they also are able to move in direction "**A**" for being positioned selectively on rails **2** for cutting workpiece **110** at multiple selected locations simultaneously. Although not shown in the drawing figures, those of skill will be able to modify the embodiment of **Fig. 1** to achieve this alternate embodiment. An L-shaped runner **5** may be mounted on handle **1** and a second L-shaped runner **5** may be mounted on guide carriage **6** as shown in **Fig. 1****.** Runners **5** may be mounted respectively by common hardware or by other mechanical means. Runners **5** are used for supporting and guiding apparatus **100** along workpiece **110** as shown in **Fig. 4****.** It should be recognized that workpiece **110** is positioned on runners **5** between guide carriage **6** and handle **1.** Runners **5** are extensive in a second direction which is shown by arrow "**B**" in **Fig. 1** and it is this direction that apparatus **100** is moved when cutting workpiece **110.** Second direction "**B**" is non-parallel to first direction "**A**" and may preferably be orthogonal thereto but may alternately form an angle of less than 90° relative to direction "**A**". It should be recognized that handle **1,** runners **5** and both blade carriage(s) **8** and guide carriage **6** may be set at a mutual acute angle relative to rails **2.** Although not shown in the drawing figures, those of skill will be able to modify the embodiment of **Fig. 1** to achieve this alternate embodiment. As shown in **Fig. 4****,** cutting blade **11** may be engaged with blade carriage **8** in a position for cutting into workpiece **110** (best shown in **Fig. 4**) during relative movement between apparatus **100** and workpiece **110.**

As shown in the several figures a first latch **7** may be secured to guide carriage **6** and a second latch **7** may be secured to blade carriage **8.** As shown in **Fig. 5** latches **7** may be moved, as shown by arrow "**C**", between a non-engaged upright attitude and an engaged position identified by reference line **7A.** When in the engaged position the lower curved end of latch **7** (shown in phantom line) contacts rail **2** preventing blade carriage **8** from moving along rail **2.** The same action is operational for latch **7** at guide carriage **6.** Therefore, arrow "**C**" shows the possible movement of latch **7** between its alternate positions. As shown, latches **7** may be linearly extensive with a first end (upper portion) that may be used as a handle and a second curved end (lower portion) that may be used for frictional or interference contact with rail **2** when latch **7** is in its engaged position shown by line **7A as** previously discussed.

Guide carriage **6** is moved along rails **2** so that the space between runners **5** is approximately equal to the width of workpiece **110** and then it is locked in position by latch **7.** Next, blade carriage **8** is positioned at a location on workpiece **110** where cutting is desired and then latch **7** is engaged. In the field, a worker may push handle **1** in direction "**B**" thereby moving apparatus **100** along workpiece **110** to cut or score it. In a factory or shop setting, apparatus **100** may be secured at a fixed location and workpiece **110** may then be fed through apparatus **100** continuously in order to cut or score it.

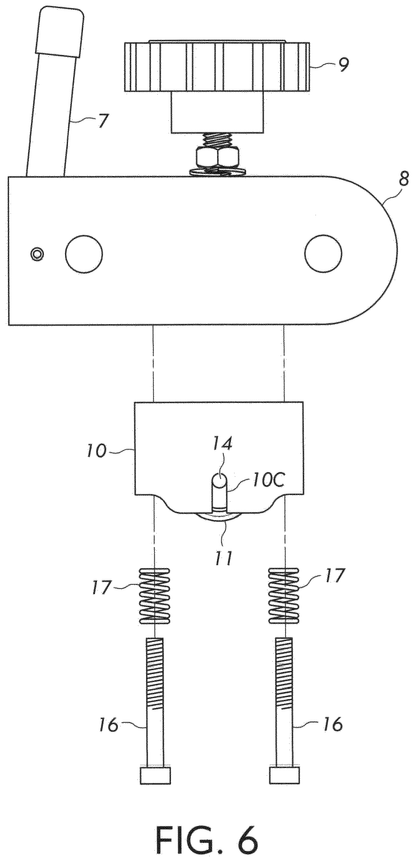

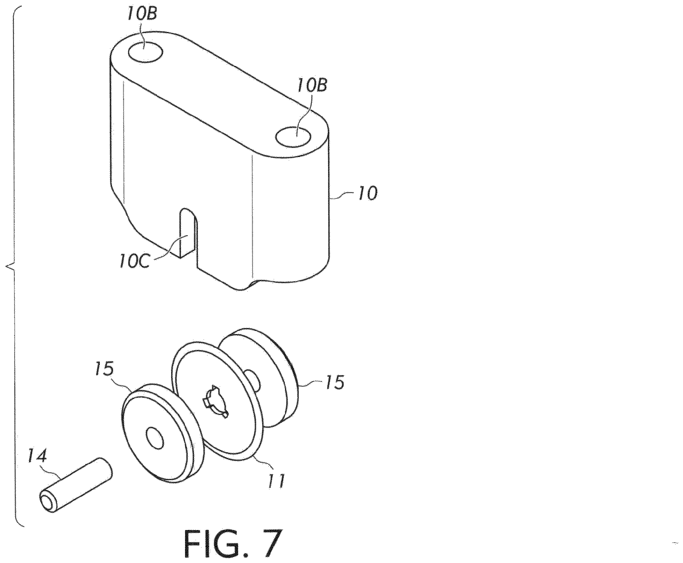

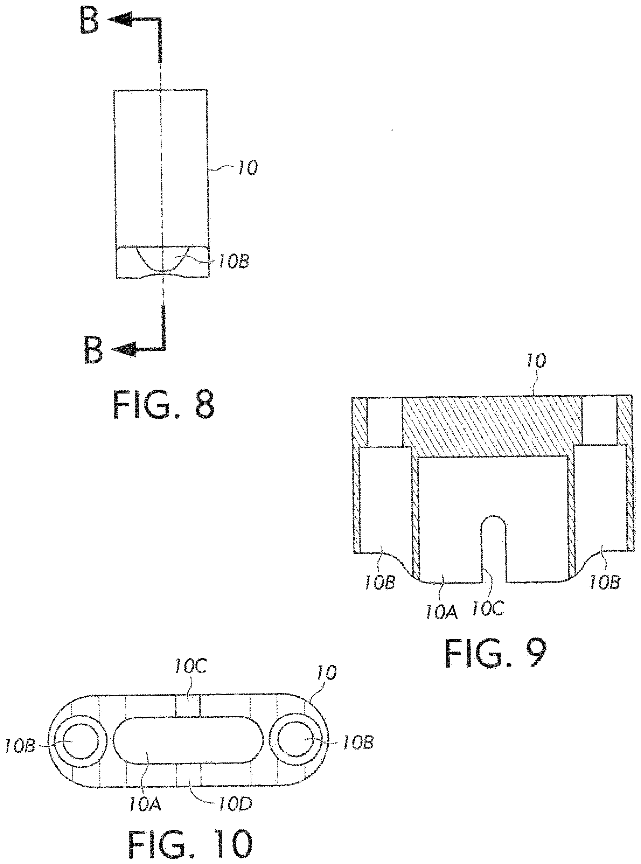

As shown in **Fig. 5****,** a blade holder **10** may be engaged within blade carriage **8.** **Figs. 5** and **6** show that blade holder **10** may be secured to blade carriage **8** by hardware including screws **16** and springs **17.** **Figs. 5** and **7** show that blade holder **10** receives blade **11,** washers **15** and axle pin **14.** In an embodiment shown by **Figs. 8-10** we see that blade holder **10** may have a blade pocket **10A,** a pair of adjustment channels **10B,** a pin mounting slot **10C** and a pin mounting hole **10D.** Cutting blade **11** and its two washers **15** may be engaged within blade pocket **10A** by axle pin **14.** Fasteners **16** and coil springs **17** may be engaged within adjustment channels **10B** as shown in **Fig. 5. Fig. 5** also illustrates the position and extent of a depth-of-cut knob **9** which is threaded into blade carriage **8,** as shown, wherein a threaded shaft of depth-of-cut knob 9 contacts blade holder **10,** wherein rotation of depth-of-cut knob **9** positions blade holder 10 and cutting blade **11** vertically.

In the foregoing description, embodiments are described as a plurality of individual parts, and methods as a plurality of individual steps and this is solely for the sake of illustration. Accordingly, it is contemplated that some additional parts or steps may be added, some parts or steps may be changed or omitted, and the order of the parts or steps may be re-arranged, while maintaining the sense and understanding of the apparatus and methods, if remaining within the scope of the claims.

## Claims

1. An apparatus (100) for cutting a workpiece (110), the apparatus (100) comprising:
a pair of spaced apart rails (2):
a blade carriage (8) slidingly engaged with said rails (2) between said handle (1) and said guide carriage (6); and
a cutting blade (11) engaged with said blade carriage (8) in a position for cutting into said workpiece (110) during relative movement between said apparatus (100) and said workpiece (110);
the apparatus (100) being **characterized in that**:
the pair of spaced apart rails (2) are fixed to a handle (1) and extend away therefrom in a first direction (A); and
the apparatus (100) comprises:
a guide carriage (6) slidingly engaged with said rails (2); and
a pair of runners (5) supporting said workpiece (110), one of said runners (5) joined with said handle (1) and a second one of said runners (5) joined with said guide carriage (6),
said runners (5) extensive in a second direction (B), said second direction (B) non-parallel to said first direction (A).

2. The apparatus of claim 1 further comprising a first latch (7) secured to said guide carriage (6) and a second latch (7) secured to said blade carriage (8), wherein said latches (7) are each movable between an engaged position inhibiting movement relative to said rails (5), and a disengaged position not inhibiting movement relative to said rails (5).

3. The apparatus of claim 2 wherein each one of said latches (7) is linearly extensive with a distal first end thereof functional as a handle and with a proximal second end thereof curved, enabling frictional contact with one of said rails (2) when said latch (7) is in said engaged position.

4. The apparatus of claim 1 wherein a blade holder (10) is secured within said blade carriage (8).

5. The apparatus of claim 4 wherein said blade holder (10) has a blade pocket (10A) and an adjustment channel (10B), said cutting blade (11) engaged within said blade pocket (10A) and a fastener (16) engaged within said adjustment channel (10B).

6. The apparatus of claim 5 wherein a coil spring (17)is engaged with said fastener (16).

7. The apparatus of claim 6 wherein a depth-of-cut knob (9) is engaged with said blade carriage (8), in contact with said blade holder (10), wherein rotation of said depth-of-cut knob (9) adjusts a vertical position of said cutting blade (11).

8. The apparatus of claim 4 wherein said blade holder (10) has a blade pocket (10A) and opposing adjustment channels (10B), said cutting blade (11) engaged within said blade pocket (10A) and a fastener (16) engaged within each of said adjustment channels (10B).

9. A method for cutting a workpiece (110) with an apparatus (100) wherein said apparatus (100) has a pair of spaced apart rails (2) fixed to a handle (1) and extending away therefrom in a first direction (A), a guide carriage (6) slidingly engaged with said rails (2), a blade carriage (8) slidingly engaged with said rails (2) between said handle (1) and said guide carriage (6), a pair of runners (5) for supporting said workpiece 110, one of said runners (5) joined with said handle and a second one of said runners (5) joined with said guide carriage (6), said runners (5) extensive in a second direction (B), said second direction (B) non-parallel to said first direction (A); and a cutting blade (11) engaged with said blade carriage (8) in a position for cutting into said workpiece (110) during relative movement between said apparatus (100) and said workpiece (110), the method comprising:
moving said guide carriage (6) on said rails (2) in said first direction (A) thereby positioning said runners (5) apart by a width of said workpiece (110);
moving said blade carriage (8) on said rails (2) in said first direction (A) thereby positioning said cutting blade (11) in a position for cutting said workpiece (110);
adjusting said cutting blade (11) relative to said workpiece (110) for a desired depth of cut into said workpiece (110);
positioning said workpiece (110) on said runners (5); and
producing relative motion between said apparatus (100) and said workpiece (110) in said second direction (B) thereby cutting said workpiece (110).

## Patentansprüche

1. Vorrichtung (100) zum Schneiden eines Werkstücks (110), wobei die Vorrichtung (100) Folgendes umfasst:
ein Paar voneinander beabstandeter Schienen (2):
einen Klingenschlitten (8), der zwischen dem Griff (1) und dem Führungsschlitten (6) gleitend mit den Schienen (2) in Eingriff steht; und
eine Schneidklinge (11), die mit dem Klingenschlitten (8) in einer Position in Eingriff steht, um während einer Relativbewegung zwischen der Vorrichtung (100) und dem Werkstück (110) in das Werkstück (110) hinein zu schneiden;
wobei die Vorrichtung (100) **dadurch gekennzeichnet ist, dass**:
das Paar beabstandeter Schienen (2) an einem Griff (1) fixiert ist und sich in einer ersten Richtung (A) von diesem weg erstreckt; und
die Vorrichtung (100) Folgendes umfasst:
einen Führungsschlitten (6), der gleitend mit den Schienen (2) in Eingriff steht; und
ein Paar Laufschienen (5), die das Werkstück (110) tragen, wobei eine der Laufschienen (5) mit dem Griff (1) verbunden ist, und eine zweite der Laufschienen (5) mit dem Führungsschlitten (6) verbunden ist, die Laufschienen (5) sich in einer zweiten Richtung (B) erstrecken, wobei die zweite Richtung (B) nicht parallel zu der ersten Richtung (A) ist.

2. Vorrichtung nach Anspruch 1, ferner umfassend eine erste Arretierung (7), die an dem Führungsschlitten (6) befestigt ist, und eine zweite Arretierung (7), die an dem Klingenschlitten (8) befestigt ist, wobei die Arretierungen (7) jeweils zwischen einer Eingriffsposition, die eine Bewegung relativ zu den Schienen (5) verhindert, und einer Ausrastposition, die eine Bewegung relativ zu den Schienen (5) nicht verhindert, bewegbar sind.

3. Vorrichtung nach Anspruch 2, wobei sich jede der Arretierungen (7) linear erstreckt, wobei ein distales erstes Ende davon als Griff fungiert und ein proximales zweites Ende davon gekrümmt ist, was einen Reibungskontakt mit einer der Schienen (2) ermöglicht, wenn sich die Arretierung (7) in der Eingriffsposition befindet.

4. Vorrichtung nach Anspruch 1, wobei ein Klingenhalter (10) innerhalb des Klingenschlittens (8) befestigt ist.

5. Vorrichtung nach Anspruch 4, wobei der Klingenhalter (10) eine Klingentasche (10A) und einen Einstellkanal (10B) aufweist, wobei die Schneidklinge (11) innerhalb der Klingentasche (10A) in Eingriff steht und ein Befestigungselement (16) innerhalb des Einstellkanals (10B) in Eingriff steht.

6. Vorrichtung nach Anspruch 5, wobei eine Schraubenfeder (17) mit dem Befestigungselement (16) in Eingriff steht.

7. Vorrichtung nach Anspruch 6, wobei ein Schnitttiefenknopf (9) in Kontakt mit dem Klingenhalter (10) mit dem Klingenschlitten (8) in Eingriff steht, wobei eine Drehung des Schnitttiefenknopfes (9) eine vertikale Position der Schneidklinge (11) einstellt.

8. Vorrichtung nach Anspruch 4, wobei der Klingenhalter (10) eine Klingentasche (10A) und gegenüberliegende Einstellkanäle (10B) aufweist, wobei die Schneidklinge (11) innerhalb der Klingentasche (10A) in Eingriff steht und ein Befestigungselement (16) innerhalb von jedem der Einstellkanäle (10B) in Eingriff steht.

9. Verfahren zum Schneiden eines Werkstücks (110) mit einer Vorrichtung (100), wobei die Vorrichtung (100) Folgendes aufweist: ein Paar voneinander beabstandeter Schienen (2), die an einem Griff (1) fixiert sind und sich in einer ersten Richtung (A) von diesem weg erstrecken, einen Führungsschlitten (6), der gleitend mit den Schienen (2) in Eingriff steht, einen Klingenschlitten (8), der zwischen dem Griff (1) und dem Führungsschlitten (6) gleitend mit den Schienen (2) in Eingriff steht, ein Paar Laufschienen (5) zum Tragen des Werkstücks (110), wobei eine der Laufschienen (5) mit dem Griff verbunden ist, und eine zweite der Laufschienen (5) mit dem Führungsschlitten (6) verbunden ist, die Laufschienen (5) sich in einer zweiten Richtung (B) erstrecken, wobei die zweite Richtung (B) nicht parallel zu der ersten Richtung (A) ist; und eine Schneidklinge (11), die mit dem Klingenschlitten (8) in einer Position in Eingriff steht, um während einer Relativbewegung zwischen der Vorrichtung (100) und dem Werkstück (110) in das Werkstück (110) hinein zu schneiden, wobei das Verfahren Folgendes umfasst:
Bewegen des Führungsschlittens (6) auf den Schienen (2) in der ersten Richtung (A), wodurch die Laufschienen (5) um eine Breite des Werkstücks (110) auseinander positioniert werden;
Bewegen des Klingenschlittens (8) auf den Schienen (2) in der ersten Richtung (A), wodurch die Schneidklinge (11) in einer Position zum Schneiden des Werkstücks (110) positioniert wird;
Einstellen der Schneidklinge (11) relativ zu dem Werkstück (110) für eine gewünschte Schnitttiefe in das Werkstück (110) hinein;
Positionieren des Werkstücks (110) auf den Laufschienen (5); und
Erzeugen einer Relativbewegung zwischen der Vorrichtung (100) und dem Werkstück (110) in der zweiten Richtung (B), wodurch das Werkstück (110) geschnitten wird.

## Revendications

1. Appareil (100) pour couper une pièce à usiner (110), l'appareil (100) comprenant :
une paire de rails espacés (2) :
un chariot porte-lame (8) en prise de manière coulissante avec lesdits rails (2) entre ladite poignée (1) et ledit chariot de guidage (6) ; et
une lame coupante (11) en prise avec ledit chariot porte-lame (8) dans une position permettant de couper dans ladite pièce à usiner (110) pendant un mouvement relatif entre ledit appareil (100) et ladite pièce à usiner (110) ;
l'appareil (100) étant **caractérisé en ce que** :
la paire de rails espacés (2) est fixée à une poignée (1) et s'éloigne de celle-ci en s'étendant dans une première direction (A) ; et
l'appareil (100) comprend :
un chariot de guidage (6) en prise coulissante avec lesdits rails (2) ; et
une paire de glissières (5) supportant ladite pièce à usiner (110), une desdites glissières (5) reliée à ladite poignée (1) et une seconde desdites glissières (5) reliée audit chariot de guidage (6), lesdites glissières (5) s'étendant dans une seconde direction (B), ladite seconde direction (B) étant non parallèle à ladite première direction (A) .

2. Appareil selon la revendication 1, comprenant en outre un premier loquet (7) fixé audit chariot de guidage (6) et un second loquet (7) fixé audit chariot porte-lame (8), lesdits loquets (7) pouvant chacun être déplacé entre une position engagée inhibant le mouvement par rapport auxdits rails (5), et une position désengagée n'inhibant pas le mouvement par rapport auxdits rails (5).

3. Appareil selon la revendication 2, dans lequel chacun desdits loquets (7) est linéairement étendu avec une première extrémité distale de celui-ci fonctionnant comme une poignée et avec une seconde extrémité proximale de celui-ci incurvée, permettant un contact par friction avec l'un desdits rails (2) lorsque ledit loquet (7) est dans ladite position engagée.

4. Appareil selon la revendication 1, dans lequel un porte-lame (10) est fixé à l'intérieur dudit chariot porte-lame (8).

5. Appareil selon la revendication 4, dans lequel ledit porte-lame (10) comporte une poche de lame (10A) et un canal de réglage (10B), ladite lame coupante (11) étant engagée dans ladite poche de lame (10A) et une attache (16) étant engagée dans ledit canal de réglage (10B).

6. Appareil selon la revendication 5, dans lequel un ressort hélicoïdal (17) est en prise avec ladite attache (16).

7. Appareil selon la revendication 6, dans lequel un bouton de profondeur de coupe (9) est en prise avec ledit chariot de lame (8), en contact avec ledit porte-lame (10), dans lequel la rotation dudit bouton de profondeur de coupe (9) ajuste une position verticale de ladite lame de coupe (11).

8. Appareil selon la revendication 4, dans lequel ledit porte-lame (10) comporte une poche de lame (10A) et des canaux d'ajustement opposés (10B), ladite lame coupante (11) étant engagée dans ladite poche de lame (10A) et une attache (16) étant engagée dans chacun desdits canaux de réglage (10B).

9. Procédé de découpe d'une pièce à usiner (110) avec un appareil (100) dans lequel ledit appareil (100) comporte une paire de rails espacés (2) fixée à une poignée (1) et s'étendant en s'éloignant de celle-ci dans une première direction (A), un chariot de guidage (6) en prise coulissante avec lesdits rails (2), un chariot porte-lame (8) en prise coulissante avec lesdits rails (2) entre ladite poignée (1) et ledit chariot de guidage (6), une paire de glissières (5) pour soutenir ladite pièce à usiner 110, l'une desdites glissières (5) jointe à ladite poignée et une seconde desdites glissières (5) jointe audit chariot de guidage (6), lesdites glissières (5) s'étendant dans une seconde direction (B), ladite seconde direction (B) étant non parallèle à ladite première direction (A) ; et une lame de coupe (11) en prise avec ledit chariot porte-lame (8) dans une position permettant de couper dans ladite pièce à usiner (110) pendant un mouvement relatif entre ledit appareil (100) et ladite pièce à usiner (110), le procédé comprenant :
le déplacement dudit chariot de guidage (6) sur lesdits rails (2) dans ladite première direction (A) positionnant ainsi lesdites glissières (5) en les séparant d'une largeur de ladite pièce à usiner (110) ;
le déplacement dudit chariot porte-lame (8) sur lesdits rails (2) dans ladite première direction (A) positionnant ainsi ladite lame de coupe (11) dans une position pour couper ladite pièce à usiner (110) ;
le réglage de ladite lame de coupe (11) par rapport à ladite pièce à usiner (110) pour obtenir une profondeur de coupe souhaitée dans ladite pièce à usiner (110) ;
le positionnement de ladite pièce à usiner (110) sur lesdites glissières (5) ; et
la production d'un mouvement relatif entre ledit appareil (100) et ladite pièce à usiner (110) dans ladite seconde direction (B), découpant ainsi ladite pièce à usiner (110).
